# EUROPEAN PATENT SPECIFICATION

(11) **EP 2 928 174 B1**
(45) Date of publication and mention of the grant of the patent: **04.01.2023**
(21) Application number: 14162937.8
(22) Date of filing: 31.03.2014
(51) Int. Cl.: H04N 1/387, G06V 10/10, G06V 10/24, G06V 30/40, G06V 40/60

(54) **A method and device for capturing a document**
Verfahren und Vorrichtung zum Erfassen eines Dokuments
Procédé et dispositif de capture d'un document

(43) Date of publication of application: 07.10.2015
(73) Proprietor: Open Text S.A., 2163 Luxembourg (LU)
(72) Inventor: Copsey, Simon, Horsham, West Sussex RH12 1SD (GB)
(74) Representative: Betten & Resch

(56) References cited:
- US-A1- 2006 008 122
- US-A1- 2011 285 873
- US-A1- 2013 148 862
- US-A1- 2013 148 914
- US-A1- 2013 163 846
- US-B1- 6 750 988
- RODRÍGUEZ-PIÑEIRO JOSÉ ET AL: "A new method for perspective correction of document images", DOCUMENT RECOGNITION AND RETRIEVAL XVIII, SPIE, 1000 20TH ST. BELLINGHAM WA 98225-6705 USA, vol. 7874, no. 1, 23 January 2011 (2011-01-23), pages 1-12, XP060010833, DOI: 10.1117/12.876155 [retrieved on 1901-01-01]

## Description

### TECHNICAL FIELD

The disclosure relates generally to capturing a document. More particularly, this disclosure relates to a method and device, for use in a mobile terminal apparatus, for capturing a document. Even more specifically, this disclosure relates to a method or apparatus for scanning a document and in particular with a quality allowing to perform Optical Character Recognition (OCR).

### BACKGROUND ART

In an electronic world, there is a demand to have all documents in an electronic form and thus easy to handle electronically only. Consequently, all documents in paper form needs to be captured, processed and stored in the electronic form. This needs to be done anytime and anywhere. In addition, to reduce the time and effort for processing the information of such documents, OCR is performed to convert the information into machine-encoded/computer-readable text. However, to achieve good results in OCR and in particular, reduce the number of false detections, the document in the electronic form needs to have a sufficient quality.

US 2011/285873 A1 relates to devices, methods, and software for capturing a frame of image data having a representation of a feature. The device includes an imaging subsystem, one or more memory components, and a processor. The imaging subsystem is capable of providing image data representative of light incident on said imaging subsystem. The one or more memory components include at least a first memory component operatively capable of storing an input frame of the image data. The processor is in communicative connection with executable instructions for enabling the processor for various steps. One step includes receiving the input frame from the first memory component. Another step includes generating a reduced resolution frame based on the input frame, the reduced resolution frame comprising fewer pixels than the input frame, in which a pixel in the reduced resolution frame combines information from two or more pixels in the input frame. Another step includes attempting to identify transition pairs comprising pairs of adjacent pixels in the reduced resolution frame having differences between the pixels that exceed a pixel transition threshold. Another step includes attempting to identify one or more linear features between two or more identified transition pairs in the reduced resolution frame. Another step includes providing an indication of one or more identified linear features in the reduced resolution frame.

US 2013/148914 A1 relates to a system and method for processing an image of a document. The method includes receiving at least one predetermined document parameter of the document. An image of the document is previewed on a display using a camera. The display provides a visual indication of a defect in the image based on the preview. A processor proposes a procedure to minimize the defect in the image. A user adjusts the camera in response to the proposal. The processor processes the image of the document.

US 2006/008122 A1 relates to a portable reading machine detects poor image conditions for performing optical character recognition processing. The portable reading machine receives an image of sufficient resolution to distinguish lines of text but not necessarily of sufficient resolution to distinguish individual characters and processes the image to determine imaging conditions from the image. The reading machine reports imaging conditions to the user.

US 6 750 988 B1 relates to a method and system for operating a photo kiosk having a scanner therein, including positioning a user-provided picture on a scanner bed of the kiosk scanner in an arbitrary orientation, and automatically determining an orientation of the picture by pre-scanning, using the kiosk scanner, at least an area of the kiosk scanner bed having the picture positioned therein at a low resolution, to produce a pre-scanned image containing pixels therein, and scanning, using the kiosk scanner, an area of the scanner bed at a high resolution to provide a photo product having the picture in a desired orientation therein irrespective of the arbitrary orientation.

US 2013/163846 A1 relates to a method and apparatus for providing an image of a rectangular target object. The method includes the steps of determining only a first dimension of a rectangular target object in an initial image, subsequently determining only a second dimension of the target object and subsequently providing a cropped and de-skewed final image of the target object responsive to the determined first and second dimension.

RODRÍGUEZ-PIÑEIRO JOSÉ ET AL: "A new method for perspective correction of document images", DOCUMENT RECOGNITION AND RETRIEVAL XVIII, SPIE, 1000 20TH ST. BELLINGHAM WA 98225-6705 USA, vol. 7874, no. 1, 23 January 2011 (2011-01-23), pages 1-12 discloses perspective distortion correction of rectangular documents.

### SUMMARY

In order to achieve the above, mobile terminal apparatuses having a device for capturing or scanning a document with a quality allowing to perform OCR are used. Specifically, such devices use positions sensors to measure the position of the device and provide information to a user as to how to change their position such that it becomes horizontal. That is, capturing a document with such a device requires that the document has a substantial horizontal position. Due to the information generated in accordance with the position of the device measure, the user then changes the position thereof such that it is substantially horizontal as well, and thus parallel to the document. However, always positioning the document horizontally burdens the user because, in particular cases where no horizontal reference plane such as a table or the like is present, the user needs to hold the document with one hand horizontally, while at the same time holding the device with the other hand horizontally as well. In addition, position sensors consume energy which, especially in view of mobile terminal apparatuses, reduces there usability due to the fact that the battery capacity of such apparatuses usually is limited.

Therefore, there is a need in the art to address the problems associated with devices for capturing a document with a quality allowing to perform OCR. The invention is defined by the appended claims.

According to the present invention, a document can be captured with a quality to perform OCR. In particular, it is achieved that distortion due to misalignment of the document to be captured and the device is reduced or avoided.

The method for capturing a document by a mobile terminal apparatus, comprises the steps of obtaining a two-dimensional image of the document, performing edge detection within the two-dimensional image to identify edges of the document, determining angles between edges detected, calculating, based on the edges detected and the angles determined, a three-dimensional position of the document relative to a position of the mobile terminal apparatus, calculating correction information to correct, by relative movement, the position of the document relative to the position of the mobile terminal apparatus, providing first guidance information derived from the correction information to a user of the mobile terminal apparatus, guiding the user to perform the relative movement, and capturing the document.

The step of determining angles between edges comprises, for each two of the edges detected, determining whether the edges have an intersection, and if the edges have an intersection, determining an angle between the two edges. It therefore is ensured that the entire document can be captured.

The method further comprises: calculating, based on the correction information, an amount of the relative movement to be performed to correct the position of the document relative to the position of the mobile terminal apparatus, and providing second guidance information according to the amount of the relative movement to the user of the mobile terminal apparatus, guiding the user to perform the relative movement. Accordingly, capturing the document is achieved more quickly because the relative movement can be performed in accordance with the second guidance information in one step.

The step of capturing is performed automatically if the amount of relative movement is equal to or lower than a predetermined movement threshold. Therefore, operating e.g. a key to trigger the step of capturing which may cause an unintentional movement of the device is omitted.

In one example, the step of capturing further comprises determining a quality value of the document before capturing, performing enhancement operations if the quality value is equal to or lower than a predetermined quality threshold, and/or performing OCR of the captured document. Therewith, the quality of the document can further be improved.

A device, for use in a mobile terminal apparatus, for capturing a document comprises means for obtaining a two-dimensional image of the document, means for performing edge detection within the two-dimensional image to identify edges of the document, means for determining angles between edges detected, means for calculating, based on the edges detected and the angles determined, a three-dimensional position of the document relative to a position of the mobile terminal apparatus, means for calculating correction information to correct, by relative movement, the position of the document relative to the position of the mobile terminal apparatus, means for providing guidance information derived from the correction information to a user of the mobile terminal apparatus, guiding the user to perform the relative movement, and means for capturing the document.

The means for determining is adapted to, for each two of the edges detected, determine whether the edges have an intersection, and if the edges have an intersection, determine an angle between the two edges.

The device further comprises: means for calculating, based on the correction information, an amount of the relative movement to be performed to correct the position of the document relative to the position of the mobile terminal apparatus, and means for providing second guidance information according to the amount of the relative movement to the user of the mobile terminal apparatus, guiding the user to perform the relative movement.

The means for capturing is further adapted to automatically capture the document if the amount of relative movement is equal to or lower than a predetermined movement threshold.

In one example, the device further comprises one or more of: means for determining a quality value of the document, means for performing enhancement operations if the quality value is equal to or lower than a predetermined quality threshold, and means for performing OCR of the captured document.

In each of the above aspects and examples, the first and the second guidance information is visual, audible, tactile, or combinations thereof.

A mobile terminal apparatus comprising the device for scanning a document, a computer program product comprising machine-executable instructions which when executed by a processing device perform the steps of the method for scanning a document, and a non-transient machine-readable medium having embodied thereon the computer program product are provided.

### BRIEF DESCRIPTION OF THE DRAWINGS

The drawings accompanying and forming part of this specification are included to depict certain aspects of the invention. A clearer impression of the invention, and of the components and operation of systems provided with the invention, will become more readily apparent by referring to the exemplary, and therefore non-limiting, embodiments illustrated in the drawings, wherein identical reference numerals designate the same components. Note that the features illustrated in the drawings are not necessarily drawn to scale.
FIG. 1 shows a flow chart/diagram illustrating a method for capturing a document, in accordance with one embodiment of the present invention.
FIG. 2 is a simplified block diagram of a device, for use in a mobile terminal apparatus, for capturing a document, in accordance with one embodiment of the present invention.
FIG. 3 is an illustration of a mobile terminal apparatus including the device for capturing a document, in accordance with one embodiment of the present invention.

### DETAILED DESCRIPTION

The invention and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure the invention in detail. It should be understood, however, that the detailed description and the specific examples, while indicating preferred embodiments of the invention, are given by way of illustration only and not by way of limitation.

Embodiments discussed herein can be implemented in suitable computer-executable and/or machine-executable instructions that may reside on a computer-readable and/or a machine-readable medium (e.g., a hard disk (HD)), hardware circuitry or the like, or any combination.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited only those elements but may include other elements not expressly listed or inherent to such process, process, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only.

Embodiments of the present invention can be implemented in a computer communicatively coupled to a network (for example, the Internet, an intranet, an internet, a WAN, a LAN, a SAN, etc.), another computer, or in a standalone computer. As is known to those skilled in the art, the computer can include a central processing unit ("CPU") or processor, at least one read-only memory ("ROM"), at least one random access memory ("RAM"), at least one hard disc drive ("HDD"), and one or more input/output ("I/O") device(s). The I/O devices can include a keyboard, monitor, printer, electronic pointing device (for example, mouse, trackball, stylist, etc.), or the like. In embodiments of the invention, the computer has access to at least one database over the network.

ROM, RAM, and HD are computer memories for storing computer-executable instructions executable by the CPU or capable of being complied or interpreted to be executable by the CPU. Within this disclosure, the term "computer readable medium" is not limited to ROM, RAM, and HD and can include any type of data storage medium that can be read by a processor. For example, a computer-readable medium may refer to a data cartridge, a data backup magnetic tape, a floppy diskette, a flash memory drive, an optical data storage drive, a CD-ROM, ROM, RAM, HDD, or the like. The processes described herein may be implemented in suitable computer-executable instructions that may reside on a computer readable medium (for example, a disk, CD-ROM, a memory, etc.). Alternatively, the computer-executable instructions may be stored as software code components on a DASD array, magnetic tape, floppy diskette, optical storage device, or other appropriate computer-readable medium or storage device.

In one exemplary embodiment of the invention, the computer-executable instructions may be lines of C++, Java, JavaScript, HTML, or any other programming or scripting code. Other software/hardware/network architectures may be used. For example, the functions of the present invention may be implemented on one computer or shared among two or more computers. In one embodiment, the functions of the present invention may be distributed in the network. Communications between computers implementing embodiments of the invention can be accomplished using any electronic, optical, ratio frequency signals, or other suitable methods and tools of communication in compliance with known network protocols.

Additionally, the functions of the disclosed embodiments may be implemented on one computer or shared/distributed among two or more computers in or across a network. Communications between computers implementing embodiments can be accomplished using any electronic, optical, radio frequency signals, or other suitable methods and tools of communication in compliance with known network protocols. It will be understood for purposes of this disclosure that a service is one or more computer processes, computing devices or both, configured to perform one or more functions. A service may present one or more interfaces which can be utilized to access these functions. Such interfaces include APIs, interfaces presented for a web services, remote procedure calls, remote method invocation, etc.

The invention generally pertains to methods and devices for capturing a document by a mobile terminal apparatus. In particular, the present invention pertains to a method and device for capturing a document with a quality allowing to perform OCR.

OCR is known in the art as being the mechanical or electronic conversion of scanned or photoed images of typewritten or printed text into machine-encoded/computer-readable text. OCR is, for example, used as a form of data entry from some sort of original paper data source. Thus, OCR is a common method of digitizing printed texts so that they can be electronically edited, searched, stored more compactly, displayed on-line, and used in machine processes such as machine translation, text-to-speech, key data extraction and text mining.

Now, non-limiting embodiments of the invention are explained in more detail by making reference to the accompanying drawings.

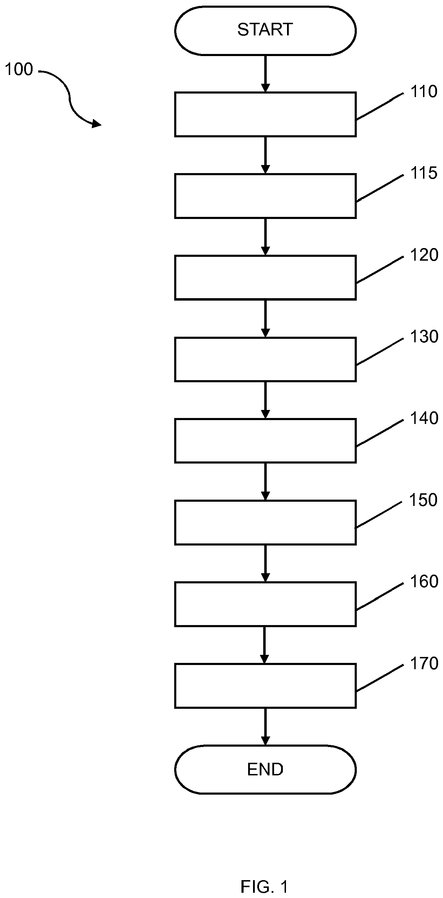

FIG. 1 shows a flow chart/diagram illustrating a method for capturing a document, in accordance with one embodiment of the present invention. The method may be performed by a mobile terminal apparatus such as a laptop, PDA, tablet computer, mobile telephone, or the like.

The document to be captured by the method disclosed hereinafter is a paper document such as invoices, bank statements, receipts, business card, mail, or any number of printed records. It will be appreciated by those skilled in the art that the document may also be a display of information on a display device such as a display screen of a laptop, tablet computer, electronic paper, e-paper, electronic ink, smart phone, mobile telephone, or any other presentation which can be captured by e.g. an optical device such as a camera of a mobile terminal apparatus.

The method 100 starts at block 110. In block 110, a two-dimensional image of the document is obtained. For example, the two-dimensional image of the document is obtained using an optical device such as a camera. The optical camera is stand-alone with a connection to the mobile terminal apparatus, or incorporated in the mobile terminal apparatus. The two-dimensional image has a particular resolution, color depth, and brightness. The two-dimensional image is displayed on a display device of the mobile terminal apparatus and thus viewed by a user of the mobile terminal apparatus.

Optionally, pre-processing is performed in block 115 to improve the quality of the two-dimensional image obtained in block 110. The pre-processing includes smoothing such as Gaussian smoothing, noise reduction, or the like. For example, it is determined whether the exposure of the two-dimensional image is insufficient, e.g., too dark, too bright, shadows, etc., and/or whether the image definition is insufficient. If insufficiency is determined, i.e., above a predetermined threshold, corresponding guidance information to guide the user in performing an action to improve quality of the two-dimensional image is generated. Examples of such guidance information include to reduce/increase the exposure, switch on/off a flash light or lamp of the mobile terminal apparatus, and to move closer/farther away the optical device or the document. The guidance information is provided to the user of the mobile terminal apparatus. For example, the guidance information is displayed on the display device. The method then starts again in block 110.

Then, in block 120, an edge detection process is performed within the two-dimensional image to identify edges of the document in the two-dimensional image.

As it is known to those skilled in the art, edge detection relates to a mathematical method aiming at identifying points at which the brightness changes sharply or has discontinuities. In general, methods for edge detection comprise search-based methods detecting edges by first computing a measure of edge strength, e.g., a first-order derivative expression such as the gradient magnitude, and then searching for local directional maxima of the gradient magnitude using a computed estimate of the local orientation of the edge, e.g., the gradient direction, and zero-crossing based methods searching for zero crossings in a second-order derivative expression computed from the two-dimensional image in order to find edges, e.g., the zero-crossings of the Laplacian or the zero-crossings of a non-linear differential expression. Such methods for edge detection are known to those skilled in the art so that detailed explanation with respect thereof is omitted.

For example, edge detection is performed according to the present invention by scanning the two-dimensional image obtained in block 110, horizontally line-by-line, and/or vertically column-by-column, in order to detect an abrupt transition in the color from e.g. black to white, or in the brightness from dark to light, and vise versa. The abrupt transitions detected horizontally/vertically are then combined to form horizontal/vertical edges. Preferably, colored lines corresponding to the edges detected are displayed on the display device of the mobile terminal device to visualize the edges detected and guide the user.

In block 120, preferably four edges of the document are detected in the two-dimensional image by performing the edge detection process. If less than four edges are detected, corresponding guidance information is generated and provided to the user of the mobile terminal apparatus, to guide the user to obtain the two-dimensional image such that all four edges of the document can be detected. For example, this guidance information is displayed on the display device of the mobile terminal apparatus requesting the user to move the mobile terminal, or the optical device in case the optical device and the mobile terminal are separate devices and only loosely coupled, in a direction that all for edges of the document are displayed on the display device.

In addition, it is determined in block 120 whether two adjacent edges detected have an intersection with one another within, or outside, the two-dimensional image. If the two adjacent edges have an intersection, the angle between the two adjacent edges is determined. If there is no intersection determined, the two adjacent edges is elongated until they have an intersection with one another within, or outside, the two-dimensional image. Otherwise, if it is determined that the two adjacent edges have no intersection within the two-dimensional image, corresponding guidance information indicating the same is generated. The guidance information is provided to the user of the mobile terminal apparatus, and guide the user to obtain an two-dimensional image of the entire document. For example, the guidance information is displayed on the display device of the mobile terminal apparatus. Examples of the guidance information include to change the color of the lines with which the edges detected are highlighted, for example, to a signal color. The method then starts again with block 110.

Optionally, it is analyzed whether the document from which the two-dimensional image is obtained is sufficiently flat. In one example, as the background of the document usually has a uniform color, the region between the edges detected is analyzed with respect to whether its color is uniform, or not. In another example, it is determined whether each of the edges detected in block 120 is a straight line. In case, non-uniformity, or an edge not being a straight line, is detected, corresponding guidance information is generated. The guidance information is provided to the user of the mobile terminal apparatus, and guide the user to flatten the document. For example, the guidance information is displayed on the display device of the mobile terminal apparatus. The method then starts again with block 110.

In block 130, angles between the edges detected in block 120 are determined. The edges detected in block 120 are considered as being rays sharing a common endpoint, namely the intersection of the edges. For each of the edges, an angle in the plane of the two-dimensional image is determined. Methods for determining an angle formed by two rays are known to those skilled in the art. Detailed description with respect thereto therefore is omitted.

The method then turns to block 140 in which a three-dimensional position of the document relative to a position of the mobile terminal apparatus is calculated based on the edges detected in block 120 and the angles determined in block 130. The three-dimensional position of the document corresponds to a document plane, and the plane of the two-dimensional image corresponds to a reference plane parallel to the sensor plane of the optical device. Furthermore, it is assumed that the shape of the document substantially corresponds to a rectangle. That is, adjacent edges of the document are perpendicular to one another. Exemplary processing in block 140 includes projection, or keystone correction.

According to the invention, the processing in block 140 is performed as follows. As described above it is assumed that the document from which the two-dimensional image is obtained has a rectangular shape, and that the reference plane corresponds to the plane of the two-dimensional image with respect to which the plane of the document is to be calculated. Furthermore, the edges detected in block 120 and the angles determined in block 130 are taken as input to the processing. The processing in principle is performed in two steps, namely a step for calculating the right-to-left tilt of the plane of the document with respect to the reference plane, and a step of calculating the top-to-bottom tilt of the document with respect to the reference plane. As it will be appreciated by one skilled in the art, the order of the aforementioned steps is insignificant. Furthermore, the steps are either performed sequentially or in parallel.

For the right-to-left tilt, it is determined whether the left edge or the right edge is longer in length in the two-dimensional image. The edge being longer in length then is regarded as being more close to the optical device of the mobile terminal apparatus. Alternatively, the same can be achieved by comparing the angles, wherein the edge having acute angles with its adjacent edges is regarded more close to the optical device than the edge having obtuse angles with its adjacent edges. The plane of the two-dimensional image then is turned in three-dimensional space around a turning axis lying in the same plane and being parallel to either the left or the right edge. For example, the turning axis may correspond to the right or the left edge. Alternatively, the plane of the two-dimensional image is turned until the angles between the adjacent edges become substantially perpendicular, and/or until the left and right edges become substantially equal in length. As a result of turning the plane of the two-dimensional image, a transformation matrix for transforming the reference plane to the plane of the document within one plane is generated.

For the top-to-bottom tilt, the above is performed similarly with respect to the top edge and the bottom edge, thereby resulting in a transformation matrix for transforming the reference plane to the plane of the document in another plane.

The plane of the document in the three-dimensional space is then calculated using the transformation matrices and the reference plane.

Then, in block 150, correction information is calculated to correct the position of the document relative to the position of the mobile terminal apparatus. Specifically, the correction information is information corresponding to a relative movement with respect to the sensor plane, or the document, such that the positions of the document and the sensor plane become substantially parallel. For example, the angles between the plane of the document corresponding to the three-dimensional position thereof, and the reference plane is calculated, e.g., using normal vectors of the planes as it will be appreciated by one skilled in the art, and the correction information is derived from the angles between the planes. The correction information corresponds to directions for relative movement, and if the relative movement is carried out in the directions, the angles between the planes are reduced until they become substantially equal to zero, thereby reducing the tilt of the plane of the document with respect to the reference plane.

According to the invention, an amount of the relative movement to be performed to correct the position of the document relative to the position of the mobile terminal apparatus is calculated based on the correction information. The angle between the planes is used as information indicating the amount of the relative movement.

In block 160, guidance information is derived from the correction information. The guidance information is information provided to the user in order to guide the user to perform the relative movement. For example, the guidance information is displayed on the display device of the mobile terminal apparatus as first guidance information. Examples of the first guidance information are discussed in more detail below.

In case the amount of the relative movement is calculated as well, according to the present invention, the first guidance information derived further includes additional information, or additional guidance information is derived, indicating the amount of the relative movement and guiding the user to perform the relative movement corresponding to the amount. The additional guidance information is provided to the user, e.g., by being displayed on the display device of the mobile terminal apparatus, as second guidance information. In accordance with at least the first guidance information, the user then changes the position of either the document, or the mobile terminal apparatus. That is, the user changes the position of the document to be captured or the optical device of the mobile terminal apparatus by performing relative movement in the direction as indicated by the first guidance information. In addition, the user performs relative movement with an amount as indicated by the second guidance information. When performing relative movement, a remaining amount of relative movement to be performed is calculated based on the amount of relative movement performed. In addition, if the amount of relative movement as indicated by the second guidance information is performed, the user is informed correspondingly.

According to the invention, the blocks 110 to 160 are performed repeatedly. To be more specific, if the position of the mobile terminal apparatus, or the position of the document, is changed by performing relative movement in accordance with the first and/or second guidance information provided to a particular extent, the method returns to, or starts again at, block 110. Specifically, when relative movement is performed, at least the amount of relative movement as indicated by the second guidance information is compared with a predetermined threshold value. If the amount is lower than, or equal to, the threshold value, the method turns to block 170; otherwise, the blocks 110 to 160 are repeated.

In block 170, the document is captured. Thus, an image of the document is taken by using e.g. the optical device, like a camera or another optical sensor, of or connected to the mobile terminal apparatus. The image is processed by the mobile terminal apparatus, stored in a memory of the mobile terminal apparatus, or transmitted to an external device for further processing, or an external storage, via a communication link. For example, processing of the image at the external device includes OCR processing.

According to the invention, the document is captured in block 170 automatically if the amount of relative movement to be performed by the user is equal to or lower than a predetermined movement threshold. To be more specific, if the amount of relative movement is equal to, or lower than, a predetermined movement threshold, capturing is performed automatically. Preferably, if the amount of relative movement is equal to, or lower than, a predetermined movement threshold for a particular time period, capturing is performed automatically. For example, the particular time period either is predetermined, or pre-configured by the user.

Additionally, capturing in block 170 comprises determining a quality value of the document before it is captured, performing enhancement operations if the quality value is equal to or lower than a predetermined quality threshold, and/or performing OCR of the captured document. Enhancement operations are similar to those described above with respect to pre-processing. For example, enhancement operations comprise contrast adjustment, brightness adjustment, white balance, or the like.

The guidance information is visual, audible, tactile, or combinations thereof. For example, the first guidance information indicating a direction is displayed on the display device of the mobile terminal apparatus using icons, arrows, or the like, and/or output audible sounds using a speaker device of the mobile terminal apparatus. The second guidance information preferably is displayed on the display device using a simple bar graph, or scale. Also, sensible vibrations are generated using vibrations devices of the mobile terminal apparatus to provide tactile guidance information.

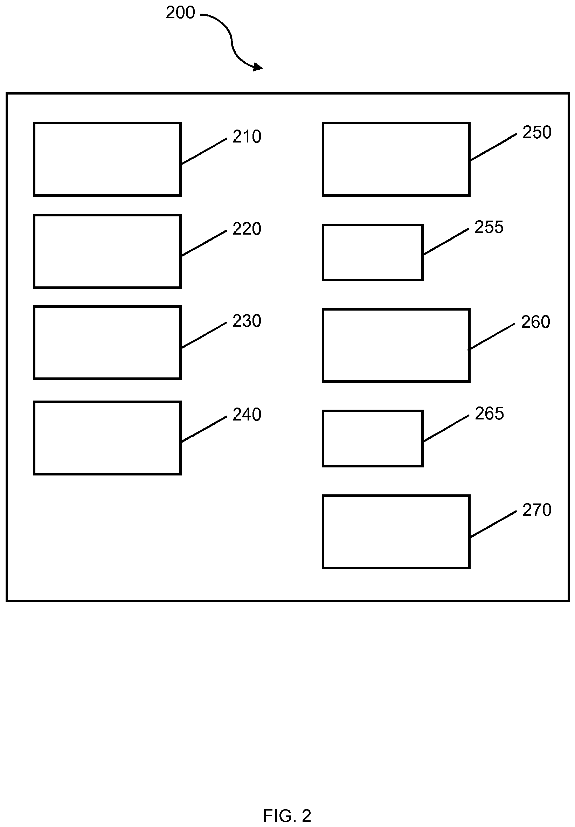

FIG. 2 is a simplified block diagram of a device, for use in a mobile terminal apparatus, for capturing a document, in accordance with one embodiment of the present invention.

In principle, the device 200 performs functions to or has means adapted to perform steps of a method as described above with reference to FIG. 1.

To be more specific, the device 200 comprises means 210 adapted to obtain a two-dimensional image of the document, means 220 adapted to perform edge detection within the two-dimensional image to identify edges of the document, means 230 adapted to determine angles between edges detected, means 240 adapted to calculate, based on the edges detected and the angles determined, a three-dimensional position of the document relative to a position of the mobile terminal apparatus, means 250 adapted to calculate correction information to correct, by relative movement, the position of the document relative to the position of the mobile terminal apparatus, means 260 adapted to provide guidance information derived from the correction information to a user of the mobile terminal apparatus, guiding the user to perform the relative movement, and means 270 adapted to capture the document.

Particularly, the means 210 is an optical device such as a camera, the means 220 to 250 correspond to a central processor, and the means 260 is a display device, a sound device, or a vibration device.

The means 230 is further adapted to, for each two of the edges detected, determine whether the edges have an intersection, and if the edges have an intersection, determine an angle between the two edges.

The device 200 further comprises means 255 adapted to calculate, based on the correction information, an amount of the relative movement to be performed to correct the position of the document relative to the position of the mobile terminal apparatus, and means 265 adapted to provide second guidance information according to the amount of the relative movement to the user of the mobile terminal apparatus, guiding the user to perform the relative movement. The means 265 is a display device, a sound device, or a vibration device, and the means 265 can be combined together with the means 260.

The means 270 is further adapted to automatically capture the document if the amount of relative movement is equal to or lower than a predetermined movement threshold.

The device 200 further comprises one or more of means 272 adapted to determine a quality value of the document, means 274 adapted to perform enhancement operations if the quality value is equal to or lower than a predetermined quality threshold, and means 276 adapted to perform OCR of the captured document.

In one example, the means 260 is a vibration device and the guidance information is tactile. The vibration device comprises four vibration units, one at each side of the device 200. The vibration units are controlled separately. In accordance with the guidance information, the vibration unit at the side of the device 200 corresponding to the guidance information is activated in order guide the user to move the device 200 in the direction corresponding to the side. In addition, the activation of the vibration devices is controlled such that a force is generated urging the device in the direction corresponding to the guidance information.

In some embodiments, the device 200 described above in detail is an electronic or computing device. The device 200 preferably is included in a mobile terminal apparatus such a laptop, PDA, tablet computer, mobile telephone, or the like.

Other examples of the present invention provide a mobile terminal apparatus comprising the device shown in FIG. 2, a computer program product comprising machine-executable instructions which when executed by a processing device perform the steps of the method shown in FIG. 1, and a non-transitory computer readable medium having embodied thereon the computer program product.

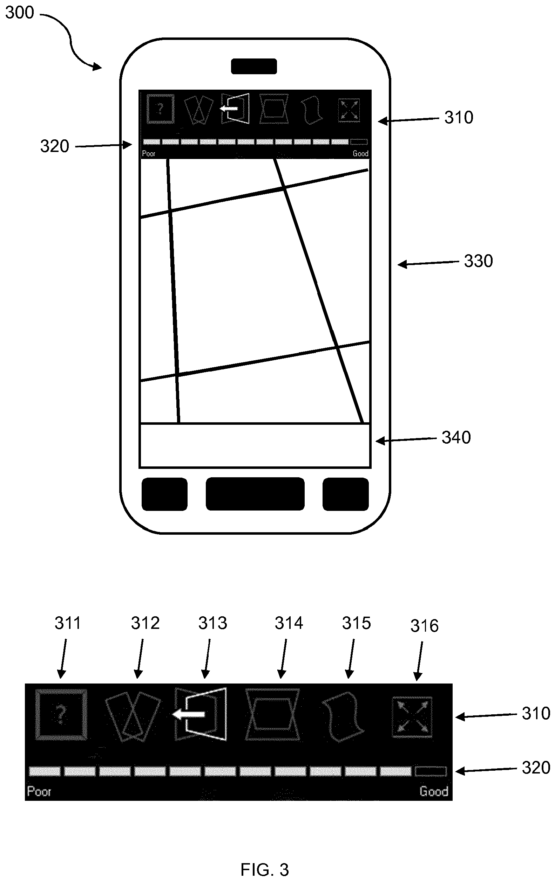

FIG. 3 is an illustration of a mobile terminal apparatus including the device for capturing a document, in accordance with one embodiment of the present invention.

In the illustration, a smart phone 300 as a mobile terminal apparatus including the device for capturing a document is shown. The smart phone 300 has a display device divided into a section for displaying the first guidance information 310, a section for displaying the second guidance information 320, a section for displaying the two-dimensional image 330 obtained from the document, and a section to turn on/off that the document is captured automatically 340.

In the illustration, the sections 310 and 320 are further shown in an enlarged manner. The section 310 contains icons corresponding to the first guidance information. The following icons are shown, from left to right: at least one of the edges was not detected 311, rotate the mobile terminal apparatus left/right 312, move the mobile terminal apparatus left/right 313, move the mobile terminal apparatus up/down 314, document is insufficiency flat 315, and move the mobile terminal closer to/farther away from the document 316. The section 320 is a simple bar graph corresponding to the second guidance information, and either shows the amount of relative rotation/movement in accordance with the icon of the section 310 or a quality value of the captured document. The document is automatically captured if the amount shown in section 320 is equal to or lower than the predetermined movement threshold, and thus the quality of the document when captured is equal to or higher than a predetermined quality threshold.

Although the invention has been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such embodiment, feature or function). Rather, the description is intended to describe illustrative embodiments, features and functions in order to provide a person of ordinary skill in the art context to understand the invention without limiting the invention to any particularly described embodiment, feature or function.

Reference throughout this specification to "one embodiment," "an embodiment," or "a specific embodiment" or similar terminology means that a particular feature, structure, or characteristic described in connection with the embodiment is included in at least one embodiment and may not necessarily be present in all embodiments. Thus, respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

Any suitable programming language can be used to implement the routines, methods or programs of embodiments of the invention described herein, including C, C++, Java, assembly language, etc. Different programming techniques can be employed such as procedural or object oriented. Any particular routine can execute on a single computer processing device or multiple computer processing devices, a single computer processor or multiple computer processors. Data may be stored in a single storage medium or distributed through multiple storage mediums, and may reside in a single database or multiple databases (or other data storage techniques). Although the steps, operations, or computations may be presented in a specific order, this order may be changed in different embodiments. In some embodiments, to the extent multiple steps are shown as sequential in this specification, some combination of such steps in alternative embodiments may be performed at the same time. The sequence of operations described herein can be interrupted, suspended, or otherwise controlled by another process, such as an operating system, kernel, etc. The routines can operate in an operating system environment or as stand-alone routines. Functions, routines, methods, steps and operations described herein can be performed in hardware, software, firmware or any combination thereof.

Embodiments described herein can be implemented in the form of control logic in software or hardware or a combination of both. The control logic may be stored in an information storage medium, such as a computer-readable medium, as a plurality of instructions adapted to direct an information processing device to perform a set of steps disclosed in the various embodiments. Based on the disclosure and teachings provided herein, a person of ordinary skill in the art will appreciate other ways and/or methods to implement the invention.

The invention may be implemented by using software programming or code in one or more general purpose digital computers, by using application specific integrated circuits, programmable logic devices, field programmable gate arrays, optical, chemical, biological, quantum or nanoengineered systems, components and mechanisms may be used. In general, the functions of the invention can be achieved by any means as is known in the art. For example, distributed, or networked systems, components and circuits can be used. In another example, communication or transfer (or otherwise moving from one place to another) of data may be wired, wireless, or by any other means.

A "computer-readable medium" may be any medium that can contain, store, communicate, propagate, or transport the program for use by or in connection with the instruction execution system, apparatus, system or device. The computer readable medium can be, by way of example, only but not by limitation, an electronic, magnetic, optical, electromagnetic, infrared, or semiconductor system, apparatus, system, device, propagation medium, or computer memory. Such computer-readable medium shall generally be machine readable and include software programming or code that can be human readable (e.g., source code) or machine readable (e.g., object code).

A "processor" includes any, hardware system, mechanism or component that processes data, signals or other information. A processor can include a system with a general-purpose central processing unit, multiple processing units, dedicated circuitry for achieving functionality, or other systems. Processing need not be limited to a geographic location, or have temporal limitations. For example, a processor can perform its functions in "real-time," "offline," in a "batch mode," etc. Portions of processing can be performed at different times and at different locations, by different (or the same) processing systems.

It will also be appreciated that one or more of the elements depicted in the drawings/figures can also be implemented in a more separated or integrated manner, or even removed or rendered as inoperable in certain cases, as is useful in accordance with a particular application. Additionally, any signal arrows in the drawings/figures should be considered only as exemplary, and not limiting, unless otherwise specifically noted.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

## Claims

1. Method (100) for capturing a rectangular document by a mobile terminal apparatus, comprising the steps of:
obtaining a two-dimensional image of the document (110) by using an optical device;
performing edge detection within the two-dimensional image to identify edges of the document (120);
determining angles between edges detected (130) by executing the following for each two of the edges detected: determining whether the edges have an intersection, and, if the edges have an intersection, determining an angle between the two edges;
calculating, based on the edges detected and the angles determined, a plane of the document in the three-dimensional space according to a three-dimensional position of the document relative to a position of the mobile terminal apparatus (140), wherein the plane of the document in the three-dimensional space is calculated by executing the following:
turning the plane of the two-dimensional image around a first turning axis, lying in the plane of the two-dimensional image and being parallel to either left or right edge of the document, and, as a result of the turning of the plane of the two-dimensional image around the first turning axis, generating a first transformation matrix to be used for transforming a reference plane to the plane of the document, wherein the reference plane is parallel to a sensor plane of the optical device and corresponds to a plane of the two-dimensional image;
turning the plane of the two-dimensional image around a second turning axis, lying in the plane of the two-dimensional image and being parallel to either top or bottom edge of the document, and, as a result of the turning of the plane of the two-dimensional image around the second turning axis, generating a second transformation matrix to be used for transforming the reference plane to the plane of the document; and
calculating the plane of the document in the three-dimensional space by using the first and the second transformation matrix and the reference plane;
upon calculating the plane of the document in the three-dimensional space, calculating correction information by calculating an angle between the plane of the document and the reference plane and deriving the correction information from the angle between the plane of the document and the reference plane, wherein the correction information corresponds to directions for relative movement of the document and the mobile terminal apparatus, which, when carried out, reduces the angle between the plane of the document and the reference plane, thereby reducing a tilt of the plane of the document with respect to the reference plane;
calculating, based on the correction information, an amount of the relative movement to be performed, wherein an angle between the plane of the document and the reference plane is used as information indicating the amount of the relative movement;
providing first guidance information indicating the directions for the relative movement derived from the correction information and second guidance information indicating the amount of the relative movement to a user of the mobile terminal apparatus, the first guidance information and the second guidance information guiding the user to perform the relative movement (160); and
if the relative movement is performed by the user to change the position of the document or the mobile terminal apparatus, repeating the steps of obtaining a two-dimensional image, performing edge detection, determining angles between edges detected, calculating a plane of the document, calculating correction information and providing first and second guidance information; and
automatically capturing the document if the amount of relative movement, which is indicated in the second guidance information, is equal to or lower than a predetermined movement threshold.

2. The method of claim 1, wherein the step of capturing (170) further comprises determining a quality value of the document before capturing, performing enhancement operations if the quality value is equal to or lower than a predetermined quality threshold, and/or performing Optical Character Recognition, OCR, of the captured document.

3. The method of one of the preceding claims, wherein the first and the second guidance information are visual, audible, tactile, or combinations thereof.

4. A device (200), for use in a mobile terminal apparatus, for capturing a rectangular document, comprising:
means for obtaining a two-dimensional image of the document (210) comprising an optical device;
means for performing edge detection within the two-dimensional image to identify edges of the document (220);
means for determining angles between edges detected (230) by executing the following for each two of the edges detected: determining whether the edges have an intersection, and, if the edges have an intersection, determining an angle between the two edges;
means for calculating, based on the edges detected and the angles determined, a plane of the document in the three-dimensional space according to a three-dimensional position of the document relative to a position of the mobile terminal apparatus (240), wherein the plane of the document in the three-dimensional space is calculated by executing the following:
turning the plane of the two-dimensional image around a first turning axis, lying in the plane of the two-dimensional image and being parallel to either left or right edge of the document, and, as a result of the turning of the plane of the two-dimensional image around the first turning axis, generating a first transformation matrix to be used for transforming a reference plane to the plane of the document, wherein the reference plane is parallel to a sensor plane of the optical device and corresponds to a plane of the two-dimensional image;
turning the plane of the two-dimensional image around a second turning axis, lying in the plane of the two-dimensional image and being parallel to either top or bottom edge of the document, and, as a result of the turning of the plane of the two-dimensional image around the second turning axis, generating a second transformation matrix to be used for transforming the reference plane to the plane of the document; and
calculating the plane of the document in the three-dimensional space by using the first and the second transformation matrix and the reference plane;
means for calculating correction information, upon calculating the plane of the document in the three-dimensional space, by calculating an angle between the plane of the document and the reference plane and deriving the correction information from the angle between the plane of the document and the reference plane, wherein the correction information corresponds to directions for relative movement of the document and the mobile terminal apparatus, which, when carried out, reduces the angle between the plane of the document and the reference plane, thereby reducing a tilt of the plane of the document with respect to the reference plane;
means for calculating, based on the correction information, an amount of the relative movement to be performed, wherein an angle between the plane of the document and the reference plane is used as information indicating the amount of the relative movement;
means for providing first guidance information indicating the directions for the relative movement derived from the correction information and second guidance information indicating the amount of the relative movement to a user of the mobile terminal apparatus, the first guidance information and the second guidance information guiding the user to perform the relative movement (260); and
if the relative movement is performed by the user to change the position of the document or the mobile terminal apparatus, means for repeating the steps of obtaining a two-dimensional image, performing edge detection, determining angles between edges detected, calculating a plane of the document, calculating correction information and providing first and second guidance information; and
means for automatically capturing the document (270) if the amount of relative movement, which is indicated in the second guidance information, is equal to or lower than a predetermined movement threshold.

5. The device of claim 4, further comprising one or more of:
means for determining a quality value of the document;
means for performing enhancement operations if the quality value is equal to or lower than a predetermined quality threshold; and
means for performing Optical Character Recognition, OCR, of the captured document.

6. The device of one of the claims 4 to 5, wherein the first and the second guidance information are visual, audible, tactile, or combinations thereof.

7. A mobile terminal apparatus, comprising the device (200) of one of the claims 4 to 6.

8. A computer program product, comprising machine-executable instructions which when executed by a processing device perform the steps of the method of one of claims 1 to 3.

9. A non-transient machine-readable medium having embodied thereon a computer program product of claim 8.

## Patentansprüche

1. Verfahren (100) zum Erfassen eines rechteckigen Dokuments durch eine mobile Endgerätevorrichtung, wobei das Verfahren die folgenden Schritte aufweist:
ein Erhalten eines zweidimensionalen Bildes des Dokuments (110) unter Verwendung einer optischen Vorrichtung;
ein Durchführen einer Kantenerkennung innerhalb des zweidimensionalen Bildes, um die Kanten des Dokuments zu identifizieren (120);
ein Bestimmen von Winkeln zwischen den erkannten Kanten (130) durch Ausführen der folgenden Schritte für jeweils zwei der erfassten Kanten: ein Bestimmen, ob die Kanten einen Schnittpunkt haben, und, wenn die Kanten einen Schnittpunkt haben, ein Bestimmen eines Winkels zwischen den zwei Kanten;
ein Berechnen, basierend auf den erkannten Kanten und den bestimmten Winkeln, einer Ebene des Dokuments im dreidimensionalen Raum entsprechend einer dreidimensionalen Position des Dokuments relativ zu einer Position der mobilen Endgerätevorrichtung (140), wobei die Ebene des Dokuments in dem dreidimensionalen Raum durch ein Ausführen der folgenden Schritte berechnet wird:
ein Drehen der Ebene des zweidimensionalen Bildes um eine erste Drehachse, die in der Ebene des zweidimensionalen Bildes liegt und die entweder zur linken oder zur rechten Kante des Dokuments parallel ist, und, als Ergebnis des Drehens der Ebene des zweidimensionalen Bildes um die erste Drehachse, ein Erzeugen einer ersten Transformationsmatrix, die zum Transformieren einer Referenzebene in die Ebene des Dokuments zu verwenden ist, wobei die Referenzebene parallel zu einer Sensorebene der optischen Vorrichtung ist und der Ebene des zweidimensionalen Bildes entspricht;
ein Drehen der Ebene des zweidimensionalen Bildes um eine zweite Drehachse, die in der Ebene des zweidimensionalen Bildes liegt und entweder zur oberen oder zur unteren Kante des Dokuments parallel ist, und, als Ergebnis des Drehens der Ebene des zweidimensionalen Bildes um die zweite Drehachse, ein Erzeugen einer zweiten Transformationsmatrix, die zum Transformieren der Referenzebene in die Ebene des Dokuments verwendet wird; und
ein Berechnen der Ebene des Dokuments in dem dreidimensionalen Raum unter Verwenden der ersten und der zweiten Transformationsmatrix und der Referenzebene;
auf das Berechnen der Ebene des Dokuments in dem dreidimensionalen Raum, ein Berechnen von Korrekturinformationen durch ein Berechnen eines Winkels zwischen der Ebene des Dokuments und der Referenzebene und ein Ableiten der Korrekturinformationen aus dem Winkel zwischen der Ebene des Dokuments und der Referenzebene, wobei die Korrekturinformationen Richtungen für eine relative Bewegung des Dokuments und der mobilen Endgerätevorrichtung entsprechen, die, wenn sie ausgeführt werden, den Winkel zwischen der Ebene des Dokuments und der Referenzebene verringern, wodurch eine Neigung der Ebene des Dokuments in Bezug auf die Referenzebene verringert wird;
ein Berechnen eines Betrags der auszuführenden relativen Bewegung auf der Grundlage der Korrekturinformationen, wobei ein Winkel zwischen der Ebene des Dokuments und der Referenzebene als Information verwendet wird, die den Betrag der relativen Bewegung angibt;
ein Bereitstellen einer ersten Führungsinformation, die die Richtungen für die relative Bewegung angibt, die aus den Korrekturinformationen abgeleitet wird, und einer zweiten Führungsinformation, die den Betrag der relativen Bewegung angibt, für einen Benutzer der mobilen Endgerätevorrichtung, wobei die erste Führungsinformation und die zweite Führungsinformation den Benutzer anleiten, die relative Bewegung (160) durchzuführen; und
wenn die relative Bewegung von dem Benutzer durchgeführt wird, um die Position des Dokuments oder der mobilen Endgerätevorrichtung zu ändern, ein Wiederholen der Schritte des Erhaltens eines zweidimensionalen Bildes, des Durchführens der Kantenerkennung, des Bestimmens von Winkeln zwischen den erkannten Kanten, des Berechnens einer Ebene des Dokuments, des Berechnens von Korrekturinformationen und des Bereitstellens der ersten und der zweiten Führungsinformation; und
ein automatisches Erfassen des Dokuments, wenn der Betrag der relativen Bewegung, der in der zweiten Führungsinformation angegeben ist, gleich oder kleiner als ein vorbestimmter Bewegungsschwellenwert ist.

2. . Verfahren nach Anspruch 1, wobei der Schritt des Erfassens (170) ferner aufweist: ein Bestimmen eines Qualitätswerts des Dokuments vor dem Erfassen, ein Durchführen von Verbesserungsoperationen, wenn der Qualitätswert gleich oder niedriger als ein vorbestimmter Qualitätsschwellenwert ist, und/oder ein Durchführen einer optischen Zeichenerkennung (OCR) des erfassten Dokuments.

3. . Verfahren nach einem der vorstehenden Ansprüche, wobei die erste und die zweite Führungsinformation visuell, akustisch, taktil oder eine Kombination davon ist.

4. . Vorrichtung (200) zum Verwenden in einer mobilen Endgerätevorrichtung, zum Erfassen eines rechteckigen Dokuments, wobei die Vorrichtung aufweist:
Mittel (210) zum Erhalten eines zweidimensionalen Bildes des Dokuments umfassend eine optische Vorrichtung;
Mittel (220) zum Durchführen einer Kantenerkennung innerhalb des zweidimensionalen Bildes, um die Kanten des Dokuments zu identifizieren;
Mittel (230) zum Bestimmen von Winkeln zwischen den erkannten Kanten durch Ausführen des Folgenden für jeweils zwei der erfassten Kanten: ein Bestimmen, ob die Kanten einen Schnittpunkt haben, und, wenn die Kanten einen Schnittpunkt haben, ein Bestimmen eines Winkels zwischen den zwei Kanten;
Mittel (240) zum Berechnen, basierend auf den erkannten Kanten und den bestimmten Winkeln, einer Ebene des Dokuments im dreidimensionalen Raum entsprechend einer dreidimensionalen Position des Dokuments relativ zu einer Position der mobilen Endgerätevorrichtung, wobei die Ebene des Dokuments in dem dreidimensionalen Raum durch ein Ausführen der folgenden Schritte berechnet wird:
ein Drehen der Ebene des zweidimensionalen Bildes um eine erste Drehachse, die in der Ebene des zweidimensionalen Bildes liegt und die entweder zur linken oder zur rechten Kante des Dokuments parallel ist, und, als Ergebnis des Drehens der Ebene des zweidimensionalen Bildes um die erste Drehachse, ein Erzeugen einer ersten Transformationsmatrix, die zum Transformieren einer Referenzebene in die Ebene des Dokuments zu verwenden ist, wobei die Referenzebene parallel zu einer Sensorebene der optischen Vorrichtung ist und der Ebene des zweidimensionalen Bildes entspricht;
ein Drehen der Ebene des zweidimensionalen Bildes um eine zweite Drehachse, die in der Ebene des zweidimensionalen Bildes liegt und entweder zur oberen oder zur unteren Kante des Dokuments parallel ist, und, als Ergebnis des Drehens der Ebene des zweidimensionalen Bildes um die zweite Drehachse, ein Erzeugen einer zweiten Transformationsmatrix, die zum Transformieren der Referenzebene in die Ebene des Dokuments verwendet wird; und
ein Berechnung der Ebene des Dokuments in dem dreidimensionalen Raum unter Verwenden der ersten und der zweiten Transformationsmatrix und der Referenzebene;
Mittel zum Berechnen von Korrekturinformationen, auf das Berechnen der Ebene des Dokuments in dem dreidimensionalen Raum, durch ein Berechnen eines Winkels zwischen der Ebene des Dokuments und der Referenzebene und ein Ableiten der Korrekturinformationen aus dem Winkel zwischen der Ebene des Dokuments und der Referenzebene, wobei die Korrekturinformationen Richtungen für eine relative Bewegung des Dokuments und der mobilen Endgerätevorrichtung entsprechen, die, wenn sie ausgeführt werden, den Winkel zwischen der Ebene des Dokuments und der Referenzebene verringern, wodurch eine Neigung der Ebene des Dokuments in Bezug auf die Referenzebene verringert wird;
Mittel zum Berechnen eines Betrages der auszuführenden relativen Bewegung auf der Grundlage der Korrekturinformationen, wobei ein Winkel zwischen der Ebene des Dokuments und der Referenzebene als Information verwendet wird, die den Betrag der relativen Bewegung angibt;
Mittel zum Bereitstellen einer ersten Führungsinformation, die die Richtungen für die relative Bewegung angibt, die aus der Korrekturinformation abgeleitet ist, und einer zweiten Führungsinformation, die den Betrag der relativen Bewegung angibt, für einen Benutzer der Endgerätevorrichtung, wobei die erste Führungsinformation und die zweite Führungsinformation den Benutzer anleiten, die relative Bewegung (260) durchzuführen; und
wenn die relative Bewegung vom Benutzer durchgeführt wird, um die Position des Dokuments oder der mobilen Endgerätevorrichtung zu ändern, Mittel zum Wiederholen der Schritte des Erhaltens eines zweidimensionalen Bildes, des Durchführens der Kantenerkennung, des Bestimmens von Winkeln zwischen den erkannten Kanten, des Berechnens einer Ebene des Dokuments, des Berechnens von Korrekturinformationen und des Bereitstellens der ersten und der zweiten Führungsinformation; und
Mittel (270) zum automatischen Erfassen des Dokuments, wenn der Betrag der relativen Bewegung, der in der zweiten Führungsinformation angegeben ist, gleich oder kleiner als ein vorbestimmter Bewegungsschwellenwert ist.

5. . Vorrichtung nach Anspruch 4, die ferner eines oder mehrere der folgenden Mittel aufweist:
Mittel zum Bestimmen eines Qualitätswerts des Dokuments;
Mittel zum Durchführen von Verbesserungsoperationen, wenn der Qualitätswert gleich oder niedriger als ein vorbestimmter Qualitätsschwellenwert ist; und
Mittel zum Durchführen einer optischen Zeichenerkennung (Optical Character Recognition, OCR) des erfassten Dokuments.

6. . Vorrichtung nach einem der Ansprüche 4 bis 5, wobei die erste und die zweite Führungsinformation visuell, akustisch, taktil oder eine Kombination davon ist.

7. . Mobile Endgerätevorrichtung, welche die Vorrichtung (200) nach einem der Ansprüche 4 bis 6 aufweist.

8. . Computerprogrammprodukt, das maschinenausführbare Anweisungen aufweist, die, wenn sie durch eine Verarbeitungsvorrichtung ausgeführt werden, die Schritte des Verfahrens nach einem der Ansprüche 1 bis 3 ausführen.

9. . Nicht-flüchtiges maschinenlesbares Medium, auf dem ein Computerprogrammprodukt nach Anspruch 8 verkörpert ist.

## Revendications

1. Procédé (100) de capture d'un document rectangulaire par un appareil terminal mobile, comprenant les étapes consistant à :
obtenir une image bidimensionnelle du document (110) en utilisant un dispositif optique ;
effectuer une détection des bords dans l'image bidimensionnelle pour identifier des bords du document (120) ;
déterminer des angles entre les bords détectés (130) en exécutant ce qui suit pour chaque paire de bords détectés : déterminer si les bords ont une intersection, et, si les bords ont une intersection, déterminer un angle entre les deux bords ;
calculer, à partir des bords détectés et des angles déterminés, un plan du document dans l'espace tridimensionnel selon une position tridimensionnelle du document par rapport à une position de l'appareil terminal mobile (140), le plan du document dans l'espace tridimensionnel étant calculé en exécutant ce qui suit :
le fait de tourner le plan de l'image bidimensionnelle autour d'un premier axe de rotation, situé dans le plan de l'image bidimensionnelle et étant parallèle à l'un ou l'autre des bords gauche ou droit du document, et, à la suite de la rotation du plan de l'image bidimensionnelle autour du premier axe de rotation, le fait de générer une première matrice de transformation destinée à être utilisée pour transformer un plan de référence en le plan du document, le plan de référence étant parallèle à un plan de capteur du dispositif optique et correspondant à un plan de l'image bidimensionnelle ;
le fait de tourner le plan de l'image bidimensionnelle autour d'un deuxième axe de rotation, se trouvant dans le plan de l'image bidimensionnelle et étant parallèle soit au bord supérieur soit au bord inférieur du document, et, à la suite de la rotation du plan de l'image bidimensionnelle autour du deuxième axe de rotation, le fait de générer une deuxième matrice de transformation destinée à être utilisée pour transformer le plan de référence en le plan du document ; et
le fait de calculer le plan du document dans l'espace tridimensionnel en utilisant la première et la deuxième matrices de transformation et le plan de référence ;
lors du calcul du plan du document dans l'espace tridimensionnel, calculer une information de correction en calculant un angle entre le plan du document et le plan de référence et de déduire l'information de correction de l'angle entre le plan du document et le plan de référence, les informations de correction correspondant à des directions de mouvement relatif du document et de l'appareil terminal mobile, qui, lorsqu'elles sont effectuées, réduisent l'angle entre le plan du document et le plan de référence, réduisant ainsi une inclinaison du plan du document par rapport au plan de référence ;
calculer, sur la base des informations de correction, une quantité de mouvement relatif à effectuer, un angle entre le plan du document et le plan de référence étant utilisé en tant qu'information indiquant la quantité de mouvement relatif ;
fournir des premières informations de guidage indiquant les directions du mouvement relatif dérivées des informations de correction et des deuxièmes informations de guidage indiquant la quantité de mouvement relatif à un utilisateur de l'appareil terminal mobile, les premières informations de guidage et les deuxièmes informations de guidage guidant le utilisateur pour effectuer le mouvement relatif (160) ; et
si le mouvement relatif est effectué par l'utilisateur de façon à changer la position du document ou de l'appareil terminal mobile, répéter les étapes consistant à obtenir une image bidimensionnelle, à effectuer une détection de bords, à déterminer des angles entre des bords détectés, à calculer un plan du document, à calculer des informations de correction et à fournir des première et deuxième informations de guidage ; et
capturer automatiquement le document si la quantité de mouvement relatif, qui est indiquée dans la deuxième information de guidage, est égale ou inférieure à un seuil de mouvement prédéterminé.

2. Le procédé selon la revendication 1, dans lequel l'étape de capture (170) comprend en outre le fait de déterminer une valeur de qualité du document avant la capture, le fait d'effectuer des opérations d'amélioration si la valeur de qualité est égale ou inférieure à un seuil de qualité prédéterminé, et/ou le fait d'effectuer une Reconnaissance Optique de Caractères, en abrégé OCR, du document capturé.

3. Le procédé selon l'une des revendications précédentes, dans lequel les première et deuxième informations de guidage sont visuelles, sonores, tactiles ou des combinaisons de celles-ci.

4. Un dispositif (200), destiné à être utilisé dans un appareil terminal mobile, pour capturer un document rectangulaire, comprenant :
des moyens pour obtenir une image bidimensionnelle du document (210) comprenant un dispositif optique ;
des moyens pour effectuer une détection de bords dans l'image bidimensionnelle de façon à identifier les bords du document (220) ;
des moyens pour déterminer des angles entre les bords détectés (230) en exécutant ce qui suit pour chaque paire de bords détectés : déterminer si les bords ont une intersection, et, si les bords ont une intersection, déterminer un angle entre les deux bords ;
des moyens pour calculer, à partir des bords détectés et des angles déterminés, un plan du document dans l'espace tridimensionnel selon une position tridimensionnelle du document par rapport à une position de l'appareil terminal mobile (240), le plan du document dans l'espace tridimensionnel étant calculé en exécutant ce qui suit :
le fait de tourner le plan de l'image bidimensionnelle autour d'un premier axe de rotation, situé dans le plan de l'image bidimensionnelle et étant parallèle à l'un ou l'autre des bords gauche ou droit du document, et, à la suite de la rotation du plan de l'image bidimensionnelle autour du premier axe de rotation, le fait de générer une première matrice de transformation destinée à être utilisée pour transformer un plan de référence en le plan du document, le plan de référence étant parallèle à un plan de capteur du dispositif optique et correspondant à un plan de l'image bidimensionnelle ;
le fait de tourner le plan de l'image bidimensionnelle autour d'un deuxième axe de rotation, situé dans le plan de l'image bidimensionnelle et étant parallèle soit au bord supérieur, soit au bord inférieur du document, et, à la suite de la rotation du plan de l'image bidimensionnelle autour du deuxième axe de rotation, le fait de générer une deuxième matrice de transformation destinée à être utilisée pour transformer le plan de référence en le plan du document ; et
le fait de calculer le plan du document dans l'espace tridimensionnel en utilisant la première et la deuxième matrices de transformation et le plan de référence ;
des moyens pour calculer des informations de correction, lors du calcul du plan du document dans l'espace tridimensionnel, en calculant un angle entre le plan du document et le plan de référence et en déduisant les informations de correction de l'angle entre le plan du document et le plan de référence, les informations de correction correspondant à des directions de mouvement relatif du document et de l'appareil terminal mobile, qui, lorsqu'elles sont effectuées, réduisent l'angle entre le plan du document et le plan de référence, réduisant ainsi une inclinaison du plan du document par rapport au plan de référence ;
des moyens pour calculer, sur la base des informations de correction, une quantité du mouvement relatif à effectuer, un angle entre le plan du document et le plan de référence étant utilisé en tant qu'information indiquant la quantité du mouvement relatif ;
des moyens pour fournir des premières informations de guidage indiquant les directions du mouvement relatif dérivées des informations de correction et des deuxièmes informations de guidage indiquant la quantité de mouvement relatif à un utilisateur de l'appareil terminal mobile, les premières informations de guidage et les deuxièmes informations de guidage guidant l'utilisateur pour effectuer le mouvement relatif (260) ; et
si le mouvement relatif est effectué par l'utilisateur de façon à modifier la position du document ou de l'appareil terminal mobile, des moyens pour répéter les étapes consistant à obtenir une image bidimensionnelle, à effectuer une détection de bords, à déterminer des angles entre des bords détectés, à calculer un plan du document, à calculer des informations de correction et à fournir des première et deuxième informations de guidage ; et
des moyens pour capturer automatiquement le document (270) si la quantité de mouvement relatif, qui est indiquée dans les deuxièmes informations de guidage, est égale ou inférieure à un seuil de mouvement prédéterminé.

5. Le dispositif selon la revendication 4, comprenant en outre un ou plusieurs parmi :
des moyens pour déterminer une valeur de qualité du document ;
des moyens pour effectuer des opérations d'amélioration si la valeur de qualité est égale ou inférieure à un seuil de qualité prédéterminé ; et
des moyens pour effectuer une Reconnaissance Optique de Caractères, en abrégé OCR, du document capturé.

6. Le dispositif selon l'une des revendications 4 à 5, dans lequel les premières et deuxièmes informations de guidage sont visuelles, sonores, tactiles ou des combinaisons de celles-ci.

7. Un appareil terminal mobile, comprenant le dispositif (200) selon l'une des revendications 4 à 6.

8. Un produit programme d'ordinateur, comprenant des instructions exécutables par machine qui, lorsqu'elles sont exécutées par un dispositif de traitement, mettent en œuvre les étapes du procédé selon l'une des revendications 1 à 3.

9. Un support non transitoire, lisible par machine, sur lequel est incorporé un produit de programme informatique selon la revendication 8.
